# EUROPÄISCHE PATENTSCHRIFT

(11) **EP 1 588 844 B1**
(45) Veröffentlichungstag und Bekanntmachung des Hinweises auf die Patenterteilung: **09.04.2008**
(21) Anmeldenummer: 05008723.8
(22) Anmeldetag: 21.04.2005
(51) Int. Cl.: B32B 27/32, B65D 65/40

(54) **Verbund aus Kunststofflagen mit einer stossabsorbierenden Lage**
Composite material with impact absorbing layer
materiau composite avec couche a absorption de choc

(30) Priorität: 22.04.2004 DE 102004019537
(43) Veröffentlichungstag der Anmeldung: 26.10.2005
(73) Patentinhaber: ALL-PLASTIC Kunstoffwerk Gunzenhausen GmbH, 91710 Gunzenhausen (DE)
(72) Erfinder: Baumann, Joachim, 96279 Weidhausen (DE); Baumann, André, 96279 Weidhausen (DE)
(74) Vertreter: Hofmann, Matthias

(56) Entgegenhaltungen:
- DE-A1- 10 101 966

## Beschreibung

Die Erfindung betrifft einen Verbund aus Kunststofflagen zur Verpackung von Gegenständen nach Anspruch 1. Ferner betrifft die Erfindung eine Schutzhülle, insbesondere für Möbelstücke, hergestellt aus mindestens einem derartigen Verbund nach Anspruch 12, ein Verfahren zur Herstellung eines derartigen Verbundes nach Anspruch 14 sowie ein Verfahren zur Herstellung einer derartigen Schutzhülle nach Anspruch 19.

Ein Verbund der eingangs genannten Art ist durch offenkundige Vorbenutzung bekannt. Die bekannten Verbunde lassen sich nur sehr eingeschränkt bei anspruchsvollen Verpackungsaufgaben einsetzen, da entweder vorgegebene Festigkeitsanforderungen nicht erfüllt werden oder der Verbund insgesamt zu dick beziehungsweise zu schwer wird.

In der DE 101 01 996 A1 ist ein Verbund aus Kunststofflagen zur Dämmung eines Gebäudes beschrieben. Dargestellt ist dort auch ein Lagenverbund, der neben Lagen aus HDPE und LDPE eine Luftkissen-Folie aufweist.

Es ist eine Aufgabe der vorliegenden Erfindung, einen Verbund der eingangs genannten Art derart weiterzubilden, dass er neben einer hohen Festigkeit gute Verpackungseigenschaften bei möglichst geringem Gewicht aufweist.

Diese Aufgabe ist erfindungsgemäß gelöst durch einen Verbund mit den Merkmalen nach Anspruch 1.

Die erste Lage des erfindungsgemäßen Verbundes mit einer Schicht aus einem weniger leicht schmelzbaren Kunststoff ist stabil und kann sehr reißfest ausgelegt sein. Aufgrund der weiteren Schicht der ersten Lage aus einem leicht schmelzbaren Kunststoff ist eine gute Anbindung dieser ersten Lage an die zweite Lage des Verbundes gegeben. Ein unerwünschtes Ablösen der ersten Lage von der zweiten Lage ist damit verhindert. Leicht schmelzbar bedeutet in diesem Zusammenhang, dass die entsprechende Schicht bei einer Temperatur schmilzt, die maximal einige zehn °C oberhalb der Raumtemperatur liegt, und z. B. ca. 100 °C beträgt. Die zweite Lage kann auf optimale stoßabsorbierende Wirkung ausgelegt sein. Aufgrund der stabilisierenden Wirkung der ersten Lage spielt die Reißfestigkeit der zweiten Lage keine große Rolle, so dass bei der zweiten Lage eine flexible Materialwahl möglich ist. Es resultiert ein Kunststofflagenverbund, der bei niedrigem Flächengewicht gleichzeitig eine hohe Reißfestigkeit und, insbesondere aufgrund der stoßabsorbierenden Wirkung, gute Verpackungseigenschaften aufweist. Der Verbund kann insbesondere als Rollen-Folienmaterial bereitgestellt werden. Die einzelnen Verbundlagen können Polyolefine sein, die in einem Mono- oder auch in einem Coextrusionsverfahren hergestellt sind. Die Verbundlagen können insbesondere auch metallbeschichtet sein. Der erfindungsgemäße Verbund kann eingesetzt werden als Schutzverpackung mit aufgrund des stoßabsorbierenden Kunststoffmaterials gegebener Polsterwirkung, als Feuchtigkeitsschutz, als Transportschutz, als Oberflächenschutz, als Gassperre, insbesondere für den Aromaschutz, und als Isoliermaterial. Als Verbundlage kann auch eine mit Inhaltsstoffen gefüllte Kunststofffolie zum Einsatz kommen. Ein Beispiel für einen derartigen Inhaltsstoff ist Kalziumkarbonat bzw. Kreide.

Eine derartige Kunststoff/Inhaltsstoff-Lage kann als Compound gefertigt sein. Die mindestens eine Lage bzw. Schicht, die ein korrosionshemmendes Additiv aufweist, schützt einen mit dem Verbund abzudeckenden bzw. zu umhüllenden Gegenstand effizient vor Korrosion. Als Additive kommen diejenigen in Betracht, die unter dem Stichwort vapour corrosion inhibitor (VCI) bekannt sind.

Schichten der ersten Lage nach den Ansprüchen 2 und 3 lassen sich mit hoher Qualität fertigen. PELD weist eine gute Haftfähigkeit zu hieran anliegenden weiteren Lagen des Verbundes auf. PEMD hat eine hohe Reißfestigkeit.

Eine Luftpolsterschicht nach Anspruch 4, eine Vliesschicht nach Anspruch 5 oder eine Schaumstoffschicht nach Anspruch 6 weisen je nach Verpackungsanforderung gute Verpackungseigenschaften auf. Diese Schichten, die eine zweite Lage oder mehrere zweite Lagen bilden können, können auch miteinander kombiniert werden. Die Luftpolsterschicht kann aus PE (Polyethylen), vorzugsweise auch in Kombination mit PA (Polyamid) oder PP (Polypropylen) gefertigt sind. Die Luftpolsterschicht kann ihrerseits zwei- oder mehrlagig sein.

Ein Überstand gemäß den Ansprüchen 7 oder 8 erleichtert die Herstellung einer Schutzhülle aus dem Verbund. Insbesondere ist ein einfacheres randseitiges Verschweißen des Verbundes möglich, da aufgrund der überstehenden Lagen nicht die gesamte Verbundstärke verschweißt werden muss, sondern nur die jeweils überstehenden Lagen.

Ein Verbundaufbau nach Anspruch 9 weist sehr gute Verpackungseigenschaften auf, da die Schaumstoffschicht auch empfindliche Oberflächen von zu verpackenden Gegenständen schützt und die Luftpolsterschicht gleichzeitig eine gute stoßabsorbierende Wirkung hat.

Eine Luftpolsterschicht nach Anspruch 10 lässt sich kontinuierlich beim Herstellen des Verbundes fertigen.

PELD-Schichten nach Anspruch 11 führen zu einem einfachen Aufbau des Verbundes, da z. B. auf zusätzliche Klebstoffschichten verzichtet werden kann. Insbesondere ist auch eine abschnittsweise oder segmentweise Anbindung der Verbundlagen je nach Ausdehnung und Erstreckung der PELD-Schicht möglich.

Eine weitere Aufgabe der Erfindung ist es, eine Schutzhülle, insbesondere für Möbelstücke, anzugeben, welche bei hoher Reißfestigkeit gute Verpackungseigenschaften bei gleichzeitig möglichst niedrigem Gewicht aufweist.

Diese Aufgabe ist erfindungsgemäß gelöst durch eine Schutzhülle nach Anspruch 12.

Eine erfindungsgemäße Schutzhülle ist kostengünstig herstellbar und weist die Vorteile auf, die vorstehend in Bezug auf den erfindungsgemäßen Verbund erläutert wurden.

Eine Schutzhülle nach Anspruch 13 ist besonders unaufwändig herstellbar.

Eine weitere Aufgabe der Erfindung ist es, ein Herstellungsverfahren für einen erfindungsgemäßen Verbund anzugeben, welches insbesondere eine kontinuierliche Verbundherstellung ermöglicht.

Diese Aufgabe ist erfindungsgemäß gelöst durch ein Verfahren mit den Merkmalen nach Anspruch 14.

Die aufgegossene Kunststoffmasse dient gleichzeitig als Adhäsionsschicht und als Verbundlage. Die Verbundeigenschaften lassen sich über die Zusammensetzung der zur Herstellung des Verbundes eingesetzten Kunststoffe, durch die Einstellung der Gießparameter und über die Temperatur der Trägerwalze vorgeben. Neben der kontinuierlichen Verfahrensführung ist im Prinzip auch eine diskontinuierliche Verfahrensführung möglich, bei der die einzelnen Verbundlagen getrennt hergestellt und anschließend miteinander, ggf. auch segmentweise, verschweißt werden. Durch die Einbringung des korrosionshemmenden Additivs ergibt sich ein kostengünstiges Verfahren zur Herstellung eines vor Korrosion schützenden Verbundes.

Ein Ausformen nach Anspruch 15 bietet die Möglichkeit der Herstellung eines strukturierten Verbundes. Dies kann beispielsweise zur nachfolgenden Herstellung einer Luftpolsterschicht ausgenutzt werden.

Bei der Durchführung eines Verfahrens nach Anspruch 16 resultiert ein dreilagiger Verbund mit der ersten Kunststofflage, einer zweiten Kunststofflage aus den beiden verfestigten und zunächst fließfähigen Kunststoffmassen und der weiteren, dritten Kunststofflage. Dieser Verbund kann hinsichtlich seiner Reißfestigkeit, seiner Verpackungseigenschaften sowie seines Flächengewichtes durch Wahl der Materialien und Parameter für die verschiedenen Lagen optimiert werden.

Eine Herstellung der Kunststoffmasse nach Anspruch 17 ermöglicht eine kontinuierliche Massenfertigung des Verbundes.

Eine Schlitzdüse nach Anspruch 18 erlaubt die Fertigung von Verbunden unterschiedlicher Breite. Dabei können, wenn mehrere Kunststoffmassen aufgegossen werden, Schlitzdüsen mit unterschiedlicher Breite zum Einsatz kommen, so dass zueinander versetzt miteinander verbundene Kunststofflagen resultieren. Dies hat, wie oben im Zusammenhang mit dem Verbund schon dargestellt, Vorteile, was die nachfolgende Fertigung einer Schutzhülle aus dem Verbund angeht.

Eine weitere Aufgabe der Erfindung ist es, ein Verfahren zur Herstellung einer erfindungsgemäßen Schutzhülle anzugeben.

Diese Aufgabe ist erfindungsgemäß gelöst durch ein Verfahren nach Anspruch 19. Die Vorteile dieses Verfahrens entsprechen denjenigen, die oben im Zusammenhang mit den Ansprüchen 1 bis 18 genannt wurden.

Ein Ausführungsbeispiel der Erfindung wird nachfolgend anhand der Zeichnung näher erläutert. In dieser zeigen:
- Fig. 1: schematisch eine Vorrichtung zur Herstellung eines Verbundes aus Kunststofflagen; und
- Fig. 2: schematisch einen Schnitt durch einen mit der Vorrichtung nach Fig. 1 hergestellten Verbund aus Kunststofflagen.

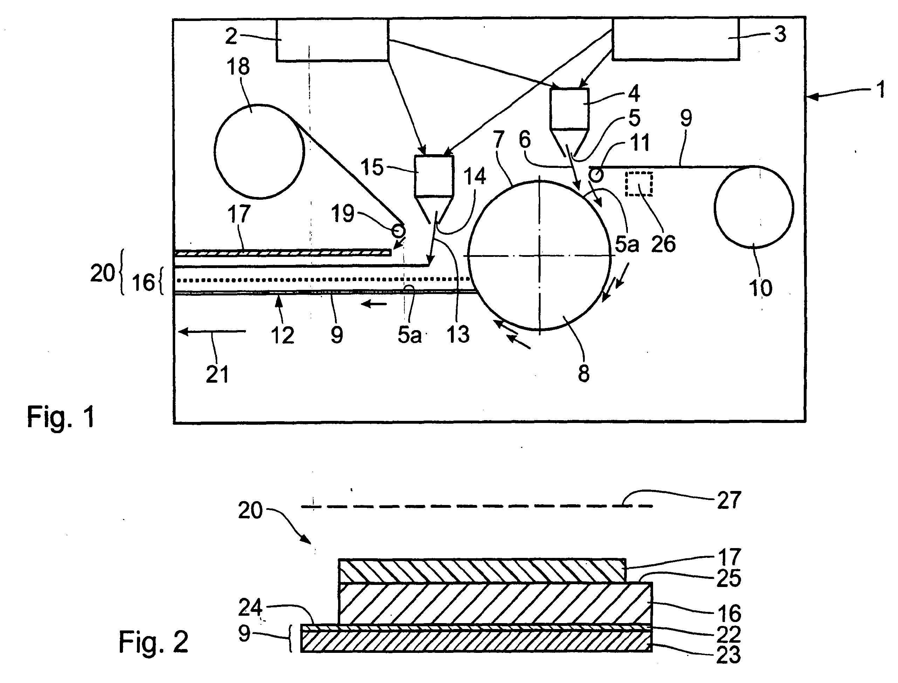

Eine Herstellungsvorrichtung 1, die in Fig. 1 schematisch dargestellt ist, dient zur Herstellung eines Verbundes aus Kunststofflagen zur Verpackung von Gegenständen. Die Herstellungsvorrichtung 1 weist zwei Extruder 2, 3 auf. Diese beschicken eine erste Breitschlitzdüse 4 mit einer fließfähigen Kunststoffmasse 5a, im vorliegenden Ausführungsbeispiel mit fließfähigem Low Density Polyethylen (LDPE). Eine Schlitzdüse 5 der Breitschlitzdüse 4 erstreckt sich senkrecht zur Zeichenebene der Fig. 1. Die Breite der Schlitzdüse 5 ist einstellbar. Aus der Schlitzdüse 5 wird ein Film 6 der Kunststoffmasse 5a von der ersten Breitschlitzdüse 5 auf eine Mantelwand 7 einer temperierten Trägerwalze 8 aufgegossen. Die Trägerwalze 8 rotiert in Fig. 1 um eine mit ihrer Symmetrieachse zusammenfallende Rotationsachse senkrecht zur Zeichenlinie der Fig. 1 im Uhrzeigersinn. Die Mantelwand 7 der Trägerwalze 8 wird einstellbar so temperiert, dass ihre Temperatur im Bereich knapp unterhalb des Schmelzpunktes der aufgegossenen Kunststoffmasse 5a liegt. Im dargestellten Ausführungsbeispiel hat die Trägerwalze 8 eine Temperatur von 30°C. Die Mantelwand 7 weist eine dreidimensionale Oberflächenstruktur in Form von nicht dargestellten Vertiefungen auf. Letztere können vom Inneren der Trägerwalze 8 her mit Unterdruck beaufschlagt werden.

In Umfangsrichtung im Uhrzeigersinn dem Aufgießpunkt der Kunststoffmasse 5a nachgeordnet wird auf die Trägerwalze 8 eine erste Kunststofflage 9 aufgelegt. Diese wird von einer Vorratsrolle 10 abgerollt und von einer vorzugsweise temperierbaren Umlenkrolle 11 kurz vor dem Aufbringen auf die Trägerwalze 8 umgelenkt. Die Kunststofflage 9 hat eine Stärke von 40µm, wobei die erste Schicht 22 ein Viertel dieser Schichtstärke und die zweite Schicht 23 drei Viertel dieser Schichtstärke aufweist. Die zweite Schicht 23 kann ihrerseits aus mehreren, zum Beispiel aus zwei Einzelschichten aufgebaut sein.

Ab der Umfangsposition auf der Trägerwalze 8, bei der die Kunststofflage 9 beginnt, an der Trägerwalze 8 anzuliegen, wird ein hierdurch entstehender Verbund 12 aus der Kunststoffmasse 5a einerseits und der Kunststofflage 9 andererseits auf der rotierenden Trägerwalze 8 gefördert, wobei er an der Mantelwand 7 anliegt. Während dieses Förderweges, der einen Bruchteil einer vollen Umdrehung der Trägerwalze 8 beträgt, wird die Kunststoffmasse 5a verfestigt. Nachdem der Verbund 12 während dieses Fördervorgangs an einem Umfangsabschnitt der Trägerwalze 8 angelegen hat, wird der Verbund 12, der nun die verfestigte Kunststoffmasse 5a sowie die Kunststofflage 8 umfasst, von der Trägerwalze 8 abgezogen. Nach dem Abziehen wird auf den Verbund 12 zunächst eine weitere Kunststoffmasse 13 aufgegossen. Das Aufgießen der Kunststoffmasse 13 erfolgt auf die verfestigte Kunststoffmasse 5a des Verbunds 12. Ausgegossen wird die weitere Kunststoffmasse 13 als Film aus einer Schlitzdüse 14 einer weiteren Breitschlitzdüse 15. Letztere ist genauso aufgebaut wie die erste Breitschlitzdüse 4. Auch die Breitschlitzdüse 15 kann von den beiden Extrudern 2, 3 mit Kunststoffmasse, im vorliegenden Ausführungsbeispiel mit LDPE, versorgt werden.

Da die nach dem Abziehen von der Trägerwalze 8 verfestigte Kunststoffmasse 5a aufgrund der dreidimensionalen Oberflächenstruktur der Mantelwand 7 der Trägerwalze 8 dreidimensional vorgeformt ist und da die weitere Kunststoffmasse 13 als ebener Film auf diese aufgegossen wird, entstehen zwischen den beiden Kunststoffmassenschichten Luftpolster, so dass aus diesen beiden Schichten eine insgesamt mit 16 bezeichnete Luftpolsterschicht entsteht. Die entstehenden Luftpolster sind in Fig. 1 durch eine rechteckig gepunktete Linie symbolisiert.

Auf die Luftpolsterschicht 16 wird unmittelbar nach dem Aufgießen der weiteren Kunststoffmasse 13, d. h. dort, wo diese weitere Kunststoffmasse 13 noch nicht verfestigt vorliegt, eine weitere Kunststofflage 17, im vorliegenden Ausführungsbeispiel aus Schaumstoff, aufgebracht. Die Kunststofflage 17 aus PE (Polyethylen) hat eine Stärke von 1 mm. Diese weitere Kunststofflage 17 wird von einer Vorratsrolle 18 abgerollt und über eine vorzugsweise temperierbare Umlenkrolle 19 unmittelbar vor dem Aufbringen auf die Luftpolsterschicht 16 umgelenkt. Die Kunststofflage 9 und die Kunststofflage 17 werden über die temperierbaren Umlenkrollen 11, 19 auf eine entsprechende Temperatur im Bereich von 30°C gebracht. Der nach Aufbringen der weiteren Kunststofflage 17 entstandene Kunststofflagenverbund 20 wird nach dem Aufbringen der weiteren Kunststofflage 17 hin zu einer nicht dargestellten Wickeleinrichtung zum Aufwickeln auf eine Lagerrolle transportiert. Hierbei kühlt der Kunststofflagen-Verbund 20 ab, wobei die weitere Kunststoffmasse 13 sich vollständig verfestigt. Die beiden Kunststoffmassen 5a und 13 dienen also sowohl zum Aufbau der Luftpolsterschicht 16 als auch als Adhäsionsschichten zur Anbindung der Kunststofflage 9 einerseits und der Kunststofflage 17 andererseits. Die aus den Kunststoffmassen 5a und 13 nach dem Verfestigen von diesen entstehenden Kunststoffschichten haben eine Stärke von 70µm.

Fig. 2 zeigt schematisch und, was die Schichtstärken der Einzelschichten angeht, nicht maßstabsgetreu, den Aufbau des Kunststofflagen-Verbunds 20. Dargestellt ist in Fig. 2 ein Schnitt quer zu einer in Fig. 1 dargestellten Förderrichtung 21 des Verbundes 20. Die in Fig. 2 untere Kunststofflage 9 umfasst eine erste Schicht 22 aus einem leicht schmelzbaren Kunststoff, im vorliegenden Beispiel aus LDPE, und eine in Fig. 2 darunterliegende zweite Schicht 23 aus einem im Vergleich zur ersten Schicht 22 weniger leicht schmelzbaren Kunststoff, im vorliegenden Beispiel aus MDPE, also Medium Density Polyethylen. An der ersten Schicht 22 der Kunststofflage 9 liegt über die Kunststoffmasse 5a die Luftpolsterschicht 16 an. Letztere liegt zwischen der Kunststofflage 9 und der weiteren Kunststofflage 17.

Wie dem in Fig. 2 dargestellten Querschnitt zu entnehmen ist, schließen am rechten Rand des Verbundes 20 die Kunststofflage 9 und die Luftpolsterschicht 16 bündig miteinander ab. Am in Fig. 2 linken Rand des Verbundes 20 steht die Kunststofflage 9 über die Luftpolsterschicht 16 mit einem ersten Randabschnitt 24 über. Am in Fig. 2 linken Rand des Verbunds 20 schließen die Luftpolsterschicht 16 und die Kunststofflage 17 bündig miteinander ab. Am in Fig. 2 rechten Rand steht die Luftpolsterschicht 16 mit einem zweiten Randabschnitt 25 über die Kunststofflage 17 über. Im vorliegenden Ausführungsbeispiel hat die erste Kunststofflage 9 eine Breite von 1600 mm. Die Luftpolsterschicht 16 hat eine Breite von 1500 mm. Die Kunststofflage 17 hat eine Breite von 1400 mm.

Bei einer zweiten Variante einer Herstellvorrichtung 1 wird ein Kunststofflagen-Verbund 20 mit einer Kunststofflage 9 hergestellt, wobei die Kunststofflage 9 den gleichen Aufbau und die gleiche Schichtstärkenverteilung der Schichtstärken 22, 23 hat wie die Kunststofflage 9 nach Fig. 2, allerdings eine Gesamtstärke von 100 µm. Vor der Umlenkrolle 11 ist bei dieser alternativen Herstellungsvorrichtung 1 mindestens ein IR-Strahler 26 vorgesehen, der die Kunststofflage 9 auf eine Temperatur von 30°C vorheizt. Ansonsten entspricht der Aufbau der Herstellungsvorrichtung 1 sowie der Verfahrensablauf beim Herstellen der Kunststofflagen-Verbundes 20 dem, was vorstehend unter Bezugnahme auf die Fig. 1 und 2 erläutert wurde.

Mit der Herstellungsvorrichtung 1 kann auch ein alternativer Kunststofflagen-Verbund hergestellt werden, bei dem die weitere Kunststofflage 17 weggelassen ist, der also die Kunststofflage 9 und die Luftpolsterschicht 16 umfasst. Anstelle der Kunststofflage 17 aus Schaumstoff kann alternativ auch eine Kunststofflage 17 aus Vliesstoff auf die Luftpolsterschicht aufgebracht werden. Hierbei kann es sich insbesondere um eine Polypropylen-(PP) Vliesschicht handeln. Alternativ ist auch eine Vliesschicht aus einem anderen Polyolefin, insbesondere aus PE (Polyethylen) möglich. Die Vliesschicht kann mit Additiven getränkt sein. Schließlich ist eine Variante eines Kunststofflagen-Verbundes 20 möglich, bei dem die Kunststofflage 9 als Vliesstoffschicht ausgeführt ist.

Über die Kunststoffmassen 5a und 13 sind die hieran angrenzenden Schichten vollflächig miteinander verklebt. Alternativ ist es denkbar, die einzelnen Lagen 9, 16, 17 des Verbundes 20 nicht vollflächig, sondern nur abschnitts- oder segmentweise miteinander zu verkleben. Als weitere Variante ist es möglich, einen Kunststofflagen-Verbund mit einheitlicher Schichtbreite herzustellen, zum Beispiel einen Verbund aus zwei Kunststofflagen 9, 17 mit einer zwischenliegenden Luftpolsterschicht 16, wobei alle drei Lagen eine Breite von 1500 mm aufweisen.

Aus dem hergestellten Verbund 12 beziehungsweise 20 wird anschließend eine Schutzhülle hergestellt, die insbesondere zum Schutz von Möbelstücken dienen kann. Dies wird nachfolgend anhand des Verbundes 20 erläutert. Hierzu werden zwei Verbunde 20 spiegelsymmetrisch zu einer in Fig. 2 gezeigten, senkrecht auf der Zeichenebene der Fig. 2 stehenden Spiegelebene 27 zueinander angeordnet. Anschließend werden diese beiden gegenüberliegenden Verbunde 20 über die einander zugewandten Randabschnitte 24, 25 sowie über einen weiteren Randabschnitt so miteinander verschweißt, dass eine einseitig offene Schutzhülle entsteht. Vorstehend wurde die Herstellung einer zweilagigen Luftpolsterschicht 16 beschrieben. Alternativ kann die Luftpolsterschicht auch mehr als zwei Lagen aufweisen. Die Luftpolsterschicht kann auch Lagen aus PA (Polyamid) oder PP (Polypropylen) aufweisen.

Die einzelnen Verbundlagen 9, 16, 17 können ihrerseits als Metall/Kunststoff-Verbunde ausgeführt sein. So können die einzelnen Lagen 9, 16, 17 z. B. als mit PE beschichtete Aluminiumfolien oder als metallisierte PE-Folien gestaltet sein.

Die einzelnen Verbundlagen 9, 16, 17 bzw. die diese aufbauenden Einzelschichten 22, 23 können ein koirosionshemmendes Additiv, zum Beispiel auf Basis der VCI-Technologie aufweisen. Es reicht dabei, wenn eine der Verbundlagen 9, 16, 17 bzw. der Schichten 22, 23 ein korrosionshemmendes Additiv aufweist. Hierzu wird das korrosionshemmende Additiv in die Kunststoffmasse 5a bzw. 13 eingebracht, bevor die Kunststosmasse 5a bzw. 13 aufgegossen wird. Alternativ oder zusätzlich zum Einbringen eines korrosionshemmenden Additivs in eine schon bestehende Lage bzw. Schicht kann dem Verbund auch eine zusätzliche korrosionshemmende Lage bzw. Schicht hinzugefügt werden.

Es resultiert ein Verbund, aus dem eine Schutzhülle hergestellt werden kann, die den mittels des Verbundes zu schützenden Gegenstand wirksam auch vor Korrosion schützt.

## Patentansprüche

1. Verbund (12; 20) aus Kunststofflagen (9, 16; 9, 16, 17) zur Verpackung von Gegenständen
- mit einer ersten Lage (9), welche umfasst:
-- eine erste Schicht (22) aus einem leicht schmelzbaren Kunststoff und
-- mindestens eine zweite Schicht (23) aus einem im Vergleich zur ersten Schicht (22) weniger leicht schmelzbaren Kunststoff, und
- mit mindestens einer zweiten Lage (16; 16, 17), welche eine größere Lagenstärke aufweist als die erste Lage (9) und aus einem stoßabsorbierenden Kunststoffmaterial besteht,
**dadurch gekennzeichnet, dass**
- das Kunststoffmaterial, aus dem mindestens eine Schicht (22, 23) der ersten Lage (9) und/oder mindestens eine zweite Lage (16; 16, 17) aufgebaut ist, ein korrosionshemmendes Additiv beinhaltet; oder
- eine zusätzliche Schicht und/oder Lage, beinhaltend ein korrosionshemmendes Additiv, vorgesehen ist.

2. Verbund nach Anspruch 1, **dadurch gekennzeichnet, dass** die erste Schicht (22) als LDPE-Schicht ausgeführt ist.

3. Verbund nach Anspruch 1 oder 2, **dadurch gekennzeichnet, dass** die zweite Schicht (23) als MDPE-Schicht ausgeführt ist.

4. Verbund nach einem der Ansprüche 1 bis 3, **gekennzeichnet durch** eine Luftpolsterschicht (16) als zweite Lage.

5. Verbund nach einem der Ansprüche 1 bis 4, **gekennzeichnet durch** eine Vliesschicht, insbesondere aus Polypropylen, als zweite Lage.

6. Verbund nach einem der Ansprüche 1 bis 5, **gekennzeichnet durch** eine Schaumstoffschicht (17) als zweite Lage.

7. Verbund nach einem der Ansprüche 1 bis 6, **dadurch gekennzeichnet, dass** die Lagen (9, 16; 9, 16, 17) eine unterschiedliche Breite haben, insbesondere dass die erste Lage (9) randseitig über die zweite Lage (16) übersteht.

8. Verbund nach einem der Ansprüche 1 bis 7, **dadurch gekennzeichnet, dass** mindestens zwei zweite Lagen (16, 17) vorgesehen sind, wobei eine (16) der zweiten Lagen (16, 17) randseitig über die andere (17) der zweiten Lagen (16, 17) übersteht.

9. Verbund nach einem der Ansprüche 1 bis 8, **gekennzeichnet durch** einen Verbundaufbau mit einer ersten Kunststofflage (9), einer Schaumstoffschicht (17) als zweiter Lage und einer zwischen der ersten Lage (9) und der Schaumstoffschicht (17) liegenden Luftpolsterschicht (16).

10. Verbund nach Anspruch 9, **dadurch gekennzeichnet, dass** die Luftpolsterschicht (16) aus zwei LDPE-Schichten (5a, 13), von denen mindestens eine (5a) Luftpolster-Noppen aufweist, aufgebaut ist.

11. Verbund nach Anspruch 10, **dadurch gekennzeichnet, dass** die LDPE-Schichten (5a, 13) der Luftpolsterschicht (16) gleichzeitig als Adhäsionsschichten zur Anbindung weiterer Lagen (9; 9, 17) des Verbundes (12; 20) dienen.

12. Schutzhülle, insbesondere für Möbelstücke, hergestellt aus mindestens einem Verbund (12; 20) nach einem der Ansprüche 1 bis 11.

13. Schutzhülle nach Anspruch 12, **gekennzeichnet durch** zwei randseitig miteinander verschweißte Verbunde (20) nach einem der Ansprüche 1 bis 12.

14. Verfahren zur Herstellung eines Verbundes (12; 12, 20) aus Kunststofflagen (9, 16; 9, 16, 17) zur Verpackung von Gegenständen nach einem der Ansprüche 1 bis 13 mit folgenden Schritten:
- Herstellen einer fließfähigen Kunststoffmasse (5a, 13),
- Aufgießen der Kunststoffmasse (5a, 13) in vorgegebener Breite auf die Mantelwand (7) einer temperierten Trägerwalze (8),
- Anlegen einer Kunststofflage (9) auf die Trägerwalze (8), so dass die aufgegossene, zunächst nicht verfestigte Kunststoffmasse (5a) zwischen der Trägerwalze (8) und der ersten Schicht (22) der Kunststofflage (9) liegt,
- Fördern des Verbundes (12) aus verfestigter Kunststoffmasse (5a) und Kunststofflage (9) auf der Trägerwalze (8) während eines Bruchteiles einer vollen Umdrehung von dieser,
- Abziehen des Verbundes (12) aus verfestigter Kunststoffmasse (5a) und Kunststofflage (9) von der Trägerwalze (8),
- Einbringen eines korrosionshemmenden Additivs in die Kunststoffmasse (5a, 13) vor dem Aufgießen von dieser.

15. Verfahren nach Anspruch 14, **dadurch gekennzeichnet, dass** während des Förderns ein Ausformen einer dreidimensionalen Oberflächenstruktur der Kunststoffmasse (5a) durch Anpassen von dieser an die entsprechend dreidimensional ausgeformte Mantelwand (7) der Trägerwalze (8) erfolgt.

16. Verfahren nach Anspruch 14 oder 15, **dadurch gekennzeichnet, dass** nach dem Abziehen auf den Verbund (12) eine weitere Kunststofflage (17) folgendermaßen aufgebracht wird:
- Herstellen einer weiteren fließfähigen Kunststoffmasse (13),
- Aufgießen der weiteren Kunststoffmasse (13) in vorgegebener Breite auf den nach dem Abziehen vorliegenden Verbund (12) aus verfestigter erster Kunststoffmasse (5a) und Kunststofflage (9),
- Anlegen einer weiteren Kunststofflage (17) auf den nach dem Abziehen vorliegenden Verbund (12), so dass die aufgegossene, zunächst nicht verfestigte weitere Kunststoffmasse (13) zwischen dem nach dem Abziehen vorliegenden Verbund (12) und der zweiten Kunststofflage (17) liegt,
- Verfestigen der weiteren Kunststoffmasse (13).

17. Verfahren nach einem der Ansprüche 14 bis 16, **dadurch gekennzeichnet, dass** die fließfähige Kunststoffmasse (5a, 13), insbesondere ein Polyolefin, durch Extrudieren hergestellt wird.

18. Verfahren nach einem der Ansprüche 14 bis 17, **dadurch gekennzeichnet, dass** das Aufgießen der Kunststoffmasse (5a, 13) mit Hilfe einer Schlitzdüse (4, 15) mit vorzugsweise einstellbarer Breite erfolgt.

19. Verfahren zur Herstellung einer Schutzhülle, insbesondere für Möbelstücke, aus mindestens zwei Verbunden (12; 20), hergestellt nach einem der Ansprüche 14 bis 18, **gekennzeichnet durch** ein randseitiges Verschweißen der Verbunde (12; 20) zur Ausbildung einer einseitig fenen Hülle.

## Claims

1. Composite (12; 20) of plastic layers (9, 16; 9, 16, 17) for packing goods, comprising
- a first layer (9) comprising
-- a first sublayer (22) of a plastic material that melts easily, and
-- at least one second sublayer (23) of a plastic material that melts less easily when compared to the first sublayer (22), and
- at least one second layer (16; 16, 17) which has a greater layer thickness than the first layer (9) and consists of a shock-absorbing plastic material,
**characterized in that**
- the plastic material of which at least one sublayer (22, 23) of the first layer (9) and/or at least a second layer (16; 16, 17) is composed includes an anti-corrosive; or
- an additional sublayer and/or layer, including an anti-corrosive, is provided.

2. Composite according to claim 1, **characterized in that** the first sublayer (22) is an LDPE sublayer.

3. Composite according to claim 1 or 2, **characterized in that** the second sublayer (23) is an MDPE sublayer.

4. Composite according to one of the claims 1 to 3, **characterized by** an air cushion layer (16) as second layer.

5. Composite according to one of the claims 1 to 4, **characterized by** a fleece layer, in particular of polypropylene, as second layer.

6. Composite according to one of the claims 1 to 5, **characterized by** a foam layer (17) as second layer.

7. Composite according to one of the claims 1 to 6, **characterized in that** the layers (9, 16; 9, 16, 17) have a different width, in particular that the first layer (9) projects beyond the edge of the second layer (16).

8. Composite according to one of the claims 1 to 7, **characterized in that** at least two second layers (16, 17) are provided, wherein one (16) of the second layers (16, 17) projects beyond the edge of the other (17) of the second layers (16, 17).

9. Composite according to one of the claims 1 to 8, **characterized by** a composite design comprising a first plastic layer (9), a foam layer (17) as second layer and an air cushion layer (16) disposed between the first layer (9) and the foam layer (17).

10. Composite according to claim 9, **characterized in that** the air cushion layer (16) is composed of two LDPE sublayers (5a, 13) of which at least one (5a) has air cushion bubbles.

11. Composite according to claim 10, **characterized in that** the LDPE sublayers (5a, 13) of the air cushion layer (16) simultaneously serve as adhesion sublayers for the adhesion of additional layers (9; 9, 17) of the composite (12; 20).

12. Protective cover, in particular for furniture, manufactured of at least one composite (12; 20) according to one of the claims 1 to 11.

13. Protective cover according to claim 12, **characterized by** two composites (20) according to one of the claims 1 to 12 which are welded at the edges.

14. Method for manufacturing a composite (12; 12, 20) of plastic layers (9, 16; 9, 16, 17) for packing goods according to one of the claims 1 to 13, comprising the following steps:
- preparing a plastic material (5a, 13) that is capable of flowing;
- pouring the plastic material (5a, 13) onto the outer wall (7) of a tempered support roller (8) in a way as to comply with a predefined width;
- applying a plastic layer (9) to the support roller (8) in a way that the plastic material (5a), which has been applied and has not hardened yet, lies between the support roller (8) and the first sublayer (22) of the plastic layer (9);
- conveying the composite (12) of hardened plastic material (5a) and plastic layer (9) over the support roller (8) during a fraction of a full revolution thereof;
- removing the composite (12) of hardened plastic material (5a) and plastic layer (9) from the support roller (8);
- adding an anti-corrosive to the plastic material (5a, 13) prior to the pouring thereof.

15. Method according to claim 14, **characterized in that** during the conveyance, a formation of a three-dimensional surface structure of the plastic material (5a) occurs due to the adaptation thereof to the corresponding three-dimensional shape of the outer wall (7) of the support roller (8).

16. Method according to claim 14 or 15, **characterized in that** after removal, another plastic layer (17) is applied to the composite (12) as follows:
- preparing an additional plastic material (13) that is capable of flowing;
- pouring the additional plastic material (13) onto the composite (12) of hardened first plastic material (5a) and plastic layer (9), which is available upon removal, in a way as to comply with a predefined width;
- applying an additional plastic layer (17) to the composite (12) that is available upon removal in a way that the additional plastic material (13), which has been applied and has not hardened yet, lies between the composite (12) that is available upon removal and the second plastic layer (17);
- hardening of the additional plastic material (13).

17. Method according to one of the claims 14 to 16, **characterized in that** the plastic material (5a, 13) that is capable of flowing, in particular a polyolefin, is prepared by extrusion.

18. Method according to one of the claims 14 to 17, **characterized in that** the plastic material (5a, 13) is applied by means of a slot nozzle (4, 15) whose width is preferably adjustable.

19. Method for manufacturing a protective cover, in particular for furniture, of at least two composites (12, 20), manufactured according to one of the claims 14 to 18, **characterized by a** welding of the composites (12; 20) at the edges thereof so as to form a cover which is open on one side.

## Revendications

1. Matériau composite (12, 20) à base de revêtements de matière synthétique (9, 16 ; 9, 16, 17) destiné à emballer des objets,
- avec un premier revêtement (9), lequel comprend :
-- une première couche (22) en une matière synthétique pouvant facilement fondre et
-- au moins une deuxième couche (23) en une matière synthétique pouvant fondre moins facilement en comparaison avec la première couche (22), et
- avec au moins un deuxième revêtement (16 ; 16, 17), lequel présente une plus grande épaisseur de revêtement que le premier revêtement (9) et lequel se compose d'une matière synthétique absorbant les chocs,
**caractérisé en ce que**
- la matière synthétique à partir de laquelle au moins une couche (22, 23) du premier revêtement (9) et/ou au moins un deuxième revêtement (16 ; 16, 17) est formé(e)/sont formés, contient un additif anticorrosif ; ou
- **en ce qu'**une couche et/ou un revêtement supplémentaire contenant un additif anticorrosif est prévu(e).

2. Matériau composite selon la revendication 1, **caractérisé en ce que** la première couche (22) est réalisée en tant que couche en polyéthylène basse densité.

3. Matériau composite selon les revendications 1 ou 2, **caractérisé en ce que** la deuxième couche (23) est réalisée en tant que couche en polyéthylène moyenne densité.

4. Matériau composite selon l'une quelconque des revendications 1 à 3, **caractérisé par** une couche de coussin d'air (16) en guise de deuxième revêtement.

5. Matériau composite selon l'une quelconque des revendications 1 à 4, **caractérisé par** une couche de non tissé, en particulier en polypropylène, en guise de deuxième revêtement.

6. Matériau composite selon l'une quelconque des revendications 1 à 5, **caractérisé par** une couche en plastique mousse (17) en guise de deuxième revêtement.

7. Matériau composite selon l'une quelconque des revendications 1 à 6, **caractérisé en ce que** les revêtements (9, 16 ; 9, 16, 17) présentent une largeur différente, en particulier **en ce que** le premier revêtement (9) dépasse du deuxième revêtement (16) du côté du bord.

8. Matériau composite selon l'une quelconque des revendications 1 à 7, **caractérisé en ce qu'**au moins deux deuxièmes revêtements (16, 17) sont prévus, l'un des deuxièmes revêtements (16, 17) dépassant de l'autre (17) des deuxièmes revêtements (16, 17) du côté du bord.

9. Matériau composite selon l'une quelconque des revendications 1 à 8, **caractérisé par** une structure composite avec un premier revêtement de matière synthétique (9), une couche en plastique mousse (17) en guise de deuxième revêtement, et une couche de coussin d'air (16) située entre le premier revêtement (9) et la couche en plastique mousse (17).

10. Matériau composite selon la revendication 9, **caractérisé en ce que** la couche de coussin d'air (16) est formée par deux couches en polyéthylène basse densité (5a, 13), dont au moins l'une (5a) présente des bosses de coussin d'air.

11. Matériau composite selon la revendication 10, **caractérisé en ce que** les couches en polyéthylène basse densité (5a, 13) de la couche de coussin d'air (16) servent simultanément de couches d'adhésion destinés à lier d'autres revêtements (9 ; 9, 17) du matériau composite (12 ; 20).

12. Enveloppe de protection, en particulier pour des meubles, fabriquée à base d'au moins un matériau composite (12 ; 20) selon l'une quelconque des revendications 1 à 11.

13. Enveloppe de protection selon la revendication 12, **caractérisée par** deux matériaux composites (20) soudés ensemble du côté du bord selon l'une quelconque des revendications 1 à 12.

14. Procédé destiné à fabriquer un matériau composite (12 ; 12, 20) à base de revêtements de matière synthétique (9, 16 ; 9, 16, 17) destiné à emballer des objets selon l'une quelconque des revendications 1 à 13, avec les étapes suivantes :
- fabrication d'une masse en matière synthétique coulante (5a, 13),
- versement de la masse en matière synthétique (5a, 13) à une largeur prédéterminée sur la paroi d'enveloppe (7) d'un cylindre porteur tempéré (8),
- application d'un revêtement en matière synthétique (9) sur le cylindre porteur (8) de sorte que la masse en matière synthétique (5a) versée et non solidifiée dans un premier temps se situe entre le cylindre porteur (8) et la première couche (22) du revêtement en matière synthétique (9),
- transport du matériau composite (12) à base de masse de matière synthétique solidifiée (5a) et de revêtement de matière synthétique (9) sur le cylindre porteur (8) pendant une fraction d'une rotation complète de celui-ci,
- retrait du matériau composite (12) à base de masse de matière synthétique solidifiée (5a) et de revêtement de matière synthétique (9) du cylindre porteur (8),
- introduction d'un additif anticorrosif dans la masse en matière synthétique (5a, 13) avant le versement de celle-ci.

15. Procédé selon la revendication 14, **caractérisé en ce que** pendant le transport une formation d'une structure de la surface en trois dimensions de la masse en matière synthétique (5a) s'effectue en adaptant celle-ci à la paroi d'enveloppe (7) réalisée de manière tridimensionnelle correspondante du cylindre porteur (8).

16. Procédé selon la revendication 14 ou 15, **caractérisé en ce qu'**après le retrait, on applique sur le matériau composite (12) un autre revêtement en matière synthétique (17) de la manière suivants :
- production d'une autre masse en matière synthétique (13) coulante,
- versement de l'autre masse en matière synthétique (13) à une largeur prédéterminée sur le matériau composite (12) à base d'une première masse en matière synthétique solidifiée (5a) et d'un revêtement en matière synthétique (9) se présentant après le retrait,
- application d'un autre revêtement de matière synthétique (17) sur le matériau composite (12) se présentant après le retrait, de sorte que l'autre masse en matière synthétique (13) versée et dans un premier temps non solidifiée, se situe entre le matériau composite (12) se présentant après le retrait et le deuxième revêtement en matière synthétique (17),
- durcissement de l'autre masse en matière synthétique (13).

17. Procédé selon l'une quelconque des revendications 14 à 16, **caractérisé en ce que** la masse en matière synthétique coulante (5a, 13), en particulier la polyoléfine, est fabriquée par extrusion.

18. Procédé selon l'une quelconque des revendications 14 à 17, **caractérisé en ce que** le versement de la masse en matière synthétique (5a, 13) s'effectue à l'aide d'une buse à fente (4, 15) avec de préférence une largeur réglable.

19. Procédé destiné à fabriquer une enveloppe de protection, en particulier pour des meubles, à base d'au moins deux matériaux composites (12 ; 20), fabriqués selon l'une quelconque des revendications 14 à 18, **caractérisé par** un soudage du côté du bord des matériaux composites (12 ; 20) servant à la formation d'une enveloppe ouverte d'un côté.
